# EUROPEAN PATENT SPECIFICATION

(11) **EP 4 290 136 B1**
(45) Date of publication and mention of the grant of the patent: **23.09.2026**
(21) Application number: 21924979.4
(22) Date of filing: 02.12.2021
(51) Int. Cl.: F24C 7/08, G06T 7/62, G01B 11/02, G01B 11/00, F24C 15/16, H04N 23/57

(54) **COOKING DEVICE AND CONTROL METHOD THEREOF**
KOCHVORRICHTUNG UND STEUERUNGSVERFAHREN DAFÜR
DISPOSITIF DE CUISSON ET SON PROCÉDÉ DE COMMANDE

(30) Priority: 04.02.2021 KR 20210015942
(43) Date of publication of application: 13.12.2023
(73) Proprietor: LG Electronics Inc., Yeongdeungpo-gu Seoul 07336 (KR)
(72) Inventor: PARK, Yunsik, Seoul 08592 (KR); NAM, Taeheon, Seoul 08592 (KR); RO, Kyungtae, Seoul 08592 (KR)
(74) Representative: Vossius & Partner Patentanwälte Rechtsanwälte mbB
(86) International application number: PCT/KR2021/018065
(87) International publication number: WO 2022/169083

(56) References cited:
- EP-A1- 3 742 052
- WO-A1-2022/218775
- DE-A1- 102013 102 295
- DE-A1- 102013 110 642
- KR-A- 20060 105 837
- KR-A- 20100 069 755
- KR-A- 20170 090 164
- KR-A- 20200 126 576
- US-A1- 2011 123 689
- US-A1- 2015 285 513

## Description

### TECHNICAL FIELD

The present invention relates to a cooking appliance and a control method therefor and, more particularly, to a cooking appliance using heat, such as an oven, and a control method therefor.

### BACKGROUND

In general, cooking appliances may refer to products for cooking food using electricity or other energy (e.g., gas) at home or indoors.

These cooking appliances include a cooking appliance using gas as a heat source, such as a gas range, a gas oven, or a gas oven range, and a cooking appliance using electricity as a heat source, such as an induction range or a microwave oven, and a cooking appliance combining an induction range using electricity and a gas oven using gas.

While cooking using such a cooking appliance, a cooking chamber of the cooking appliance is closed, and thus, a function of providing an image of the cooking chamber during cooking may be provided by a camera mounted in the cooking chamber.

Video monitoring images of a cooking appliance equipped with a camera that has been released up to now have problems in that a monitoring area is limited or image quality varies depending on the position of a shelf (rack) due to a fixed angle of view and a capture area of the camera.

It is not easy to measure information on ingredients put into a cooking appliance, for example, the volume. In order to obtain information on ingredients put into such a cooking appliance, a camera position/structure for three-dimensional analysis of an object through multiple cameras is required.

In the case of an oven equipped with a single camera, it is difficult to estimate the volume of ingredients only with image information taken in a state in which ingredients are loaded.

Therefore, a method for overcoming this problem is required.
DE 10 2013 110642 A1 relates to cooking appliance with a housing, a cooking chamber formed in the housing, a plurality of inserts in which food carriers can be arranged and at least one camera. US 2011/123689 A1 relates to an oven for baking food products. EP 3 742 052 A1 relates to a cooking assistance appliance for use with a cooking appliance. DE 10 2013 102295 A1 relates to a method for adjusting a food cooking process. WO 2022/218775 A1 relates to a method for operating a cooking appliance having a cooking chamber for receiving a food product positioned on a food support.

### TECHNICAL PROBLEM

To overcome the above problems, the present invention provides a cooking appliance and a control method thereof for estimating a volume of ingredients using a single camera.

The present invention provides a cooking appliance and a control method thereof for performing an automatic cooking process with a cooking appliance using volume information about ingredients obtained using a single camera.

Furthermore, another embodiment of the present disclosure is to overcome various problems not mentioned here. A person skilled in the art is capable of understanding the entire meaning of the specification and drawings.

### TECHNICAL SOLUTION

The present invention proposes a method for estimating a volume of ingredients based on a single camera located in the ceiling of an oven cooking chamber. The volume of the ingredients may be calculated by extracting and synthesizing information on the size of ingredients from images captured at various locations, from a time when a user opens a door and puts the ingredients on a rack to a final process of placing the ingredients in the cooking chamber.

That is, a state in which the oven door is open, the rack is placed outside the cooking chamber, and the ingredients are placed are recognized, and the size (height) of the ingredients for the image is estimated.

When the ingredients are detected to be moved from the rack and finally accommodated and stopped in the cooking chamber, the size (area) of the corresponding image is estimated.

The volume of actual ingredients is calculated using the size of the cooking chamber and the distance traveled in the oven cooking chamber based on the comprehensive size information estimated at start and end of input of the ingredients.

The invention is specified by the independent claims. Preferred embodiments are defined in the dependent claims. In the following description, although numerous features may be designated as optional, it is nevertheless acknowledged that all features comprised in the independent claims are not to be read as optional. Furthermore, in the following, the term "disclosure" will be used to refer to the invention defined by the appended claims. According to the present invention, a cooking appliance includes a main body, a cooking chamber provided with an open surface inside the main body and including a plurality of stages supporting a position of a rack configured to accommodate a cooking food, a door installed on the open surface of the main body, a camera module provided above the cooking chamber and including a camera configured to photograph the position of the rack on which the cooking food is accommodated inside the cooking chamber, a sliding part configured to move the rack between a first position outside the cooking chamber and a second position inside the cooking chamber, and a controller configured to measure a volume of the cooking food using a first captured image taken at the first position and a second captured image taken at the second position using the camera module.

The first position is a position at which the sliding part is extended farthest from the main body.

The second position is a position at which the rack is accommodated inside the cooking chamber.

The controller estimates a height of the cooking food using the first captured image based on the door being open and the sliding part being positioned at the first position.

The estimating the height of the cooking food includes estimating the height using trigonometric function calculation based on an angle from the camera module at a position at which the sliding part is extended out farthest from the main body.

The controller estimates a height of the cooking food using the first captured image based on the door being open and the sliding part being positioned at the first position.

The controller measures the volume using the estimated height and area of the cooking food.

The controller measures the volume based on an image pixel number of the first captured image and the second captured image.

The controller measures the volume by comparing an image pixel number corresponding to a height of an inner space and a side surface of the cooking chamber with the image pixel number of the first captured image and the second captured image.

According to the invention, a control method of said cooking appliance including a main body including a cooking chamber in which a door is installed, a camera module provided above the cooking chamber and including a camera configured to photograph the position of the rack on which the cooking food is accommodated inside the cooking chamber, and a sliding part configured to move the rack between a first position outside the cooking chamber and a second position inside the cooking chamber includes obtaining a first captured image taken at the first position using the camera module, obtaining a second captured image taken at the second position second position, and estimating a height of the cooking food using the first captured image, estimating an area of the cooking food using the second captured image, and estimating the volume of the cooking food.

Obtaining the first captured image is performed based on the door being open and the rack being detected to be placed at the first position.

Estimating the height of the cooking food includes estimating the height using trigonometric function calculation based on an angle from the camera module at a position at which the sliding part is extended out farthest from the main body.

Obtaining the second captured image is performed based on the sliding part being accommodated inside the cooking chamber and closing of the door is detected.

Measuring the volume of the cooking food includes measuring the volume based on an image pixel number of the first captured image and the second captured image.

Measuring the volume of the cooking food includes measuring the volume by comparing an image pixel number corresponding to a height of an inner space and a side surface of the cooking chamber with the image pixel number of the first captured image and the second captured image.

### ADVANTAGEOUS EFFECTS

According to an embodiment of the present invention, a volume of ingredients is estimated using a single camera.

An automatic cooking process with a cooking appliance is performed using volume information about ingredients obtained using a single camera.

In detail, a cooking time and temperature of a cooking appliance may be automatically set and controlled using the corresponding volume information.

Furthermore, according to another embodiment of the present disclosure, there are additional technical effects not mentioned herein. A person skilled in the art may understand this via the entire contents of the present document and drawings.

### BRIEF DESCRIPTION OF THE DRAWINGS

FIG. 1 is a perspective view of a cooking appliance according to an embodiment of the present disclosure.
FIG. 2 is a plan view of a cooking appliance according to an embodiment of the present disclosure.
FIG. 3 is a bottom view of a cooking appliance according to an embodiment of the present disclosure.
FIG. 4 is a side view showing the inside of a cooking appliance according to an embodiment of the present disclosure.
FIG. 5 is an enlarged view of part A of FIG. 4.
FIG. 6 is a schematic side view for explaining a process of measuring a volume of a cooking food using a cooking appliance according to an embodiment of the present disclosure.
FIG. 7 is a schematic diagram showing a detailed process of measuring a volume of a cooking food using a cooking appliance according to an embodiment of the present disclosure.
FIG. 8 is a flowchart illustrating a process of measuring a volume of a cooking food using a cooking appliance according to an embodiment of the present disclosure.

### DETAILED DESCRIPTION

Reference will now be made in detail to embodiments of the present disclosure, examples of which are illustrated in the accompanying drawings. Wherever possible, the same reference numbers will be used throughout the drawings to refer to the same or like parts, and redundant description thereof will be omitted. As used herein, the suffixes "module" and "unit" are added or used interchangeably to facilitate preparation of this specification and are not intended to suggest distinct meanings or functions. In describing embodiments disclosed in this specification, relevant well-known technologies may not be described in detail in order not to obscure the subject matter of the embodiments disclosed in this specification. In addition, it should be noted that the accompanying drawings are only for easy understanding of the embodiments disclosed in the present specification.

Furthermore, although the drawings are separately described for simplicity, embodiments implemented by combining at least two or more drawings are also within the scope of the present disclosure.

In addition, when an element such as a layer, region or module is described as being "on" another element, it is to be understood that the element may be directly on the other element or there may be an intermediate element between them.

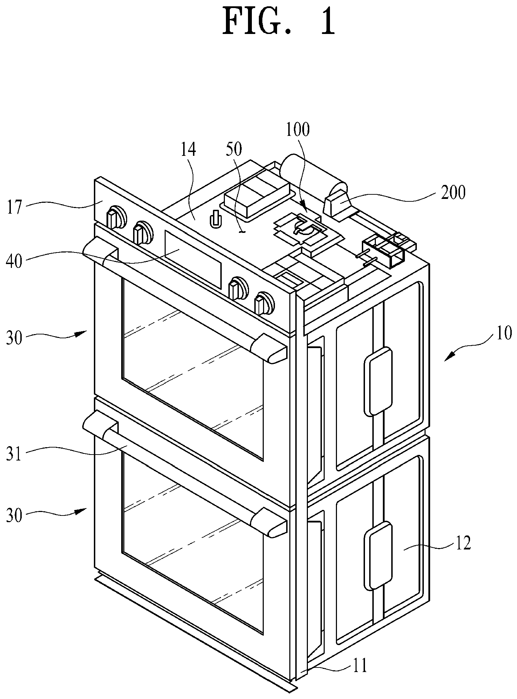

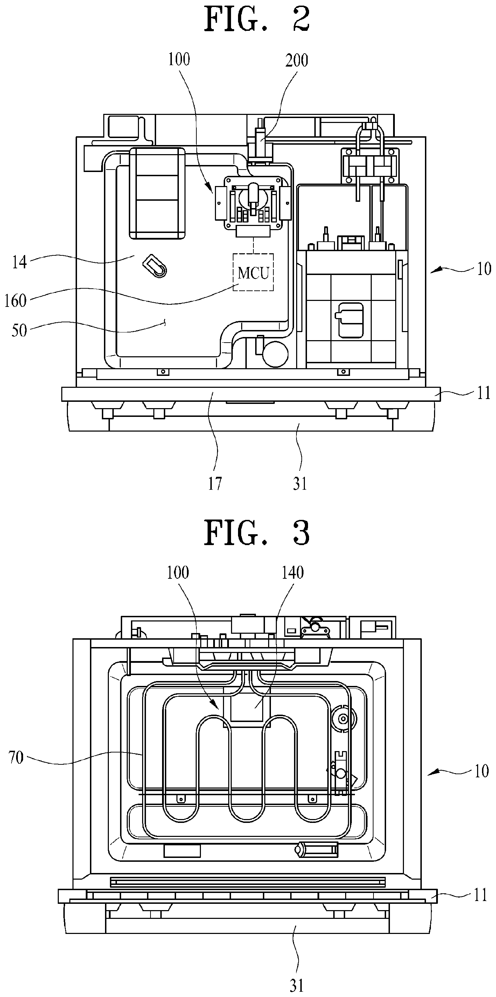

FIG. 1 is a perspective view of a cooking appliance according to an embodiment of the present disclosure. FIG. 2 is a plan view of a cooking appliance according to an embodiment of the present disclosure. FIG. 3 is a bottom view of a cooking appliance according to an embodiment of the present disclosure.

Referring to FIGS. 1 to 3, the cooking appliance may include a main body 10 forming an outer appearance, a cooking chamber 20 provided inside the main body 10 such that the front thereof is open, a door 30 provided on the front of the main body 10 to open and close the cooking chamber 20, and a camera module 100 installed above the cooking chamber 20 to capture the interior of the cooking chamber 20.

The camera module 100 may be installed in an electrical compartment 50 above the cooking chamber 20. FIG. 1 illustrates a state in which the electrical compartment 50 is open. A cooktop (not shown) on which a cooking container is seated may be provided on the electrical compartment 50. An upper panel (not shown) covering the electrical compartment 50 may be positioned.

The electrical compartment 50 is provided above the cooking chamber 20. A heat insulating material (not shown) for insulating the electrical compartment 50 and the cooking chamber 20 may be provided between the electrical compartment 50 and the cooking chamber 20 to prevent heat of the cooking chamber 20 from being transferred to the electrical cabinet 50.

In addition, other electrical components including a controller (or microcontroller unit (MCU)) 160 for controlling the cooking appliance may be installed in the electrical compartment 50. Although FIG. 2 shows a state in which the camera module 100 is connected to the controller 160, a separate controller may be embedded inside the camera module 100 and the camera module 100 may be controlled by this separate controller. While, in FIG. 2, the controller 160 is shown in a state of being located on one side of the camera module 100, this is only exemplary and an embodiment of the present disclosure is not limited thereto.

The body 10 may include a front panel 11 forming a front surface of the body 10, a side panel 12 forming a side surface of the body 10, and an upper panel 14 forming an upper surface of the body 10. Here, a rear panel forming a rear surface of the main body 10 may be located.

An electrical compartment cover 17 covering the front of the electrical compartment 50 may be provided on a front upper part of the front panel 11, and a display module 40 may be mounted on the electrical compartment cover 17.

A camera cooling fan 200 may be installed on one side of the camera module 100, for example, on a rear side of the camera module 100. External air drawn in by the camera cooling fan 200 may cool the camera module 100.

The cooking chamber 20 is provided inside the main body 10 to have a box shape, the front of which is open. Cooking materials may be taken in and out of the cooking chamber 20 through the front of the cooking chamber 20 which is open.

The open front of the cooking chamber 20 is opened and closed by a door 30. The door 30 may be hinged to a lower part of the main body 10 so as to be rotatable with respect to the main body 10.

A door handle 31 that a user may grip is provided on an upper front surface of the door 30 such that the user may open and close the cooking chamber 20 by gripping the door handle 31.

The display module 40 that displays various operation information of the oven and allows the user to input operation commands may be mounted on the electrical compartment cover 17 provided on an upper front surface of the front panel 11.

As illustrated in FIG. 3, a heater 70 for heating cooking materials may be provided in the cooking chamber 20. The heater 70 may be an electric heater including an electric resistor.

In this case, the heater 70 is not limited to the electric heater and may be a gas heater that generates heat by burning gas. Thus, the oven may include an electric oven and a gas oven.

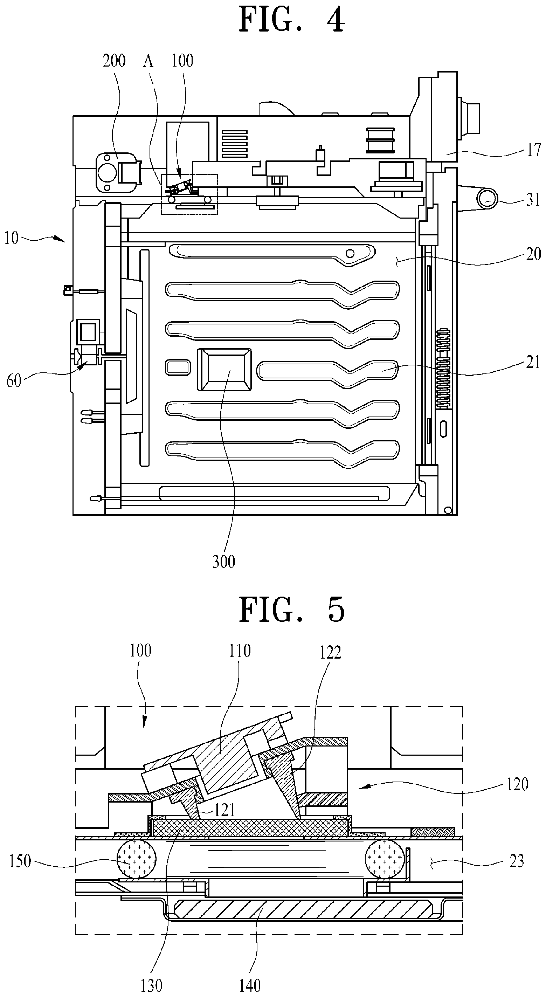

FIG. 4 is a side view illustrating the inside of a cooking appliance according to an embodiment of the present disclosure.

Referring to FIG. 4, a plurality of supports 21 may be provided on both side walls of the inside of the cooking chamber 20, and a rack (not shown) on which cooking materials may be placed may be mounted on the plurality of supports.

Accordingly, a plurality of divided spaces in the cooking chamber 20 may be utilized in various ways according to the intention of a user.

FIG. 4 illustrates an example in which five supports 21 are provided, and thus, five racks may be mounted on the supports 21.

A lighting unit 300 for illuminating the inside of the cooking chamber 20 may be positioned between the supports 21. The lighting unit 300 may provide lighting for capturing the inside of the cooking chamber 20 using the camera module 100.

In this case, the lighting unit 300 may be located at the center of the cooking chamber 20. That is, the lighting unit 300 may be located at an intermediate height based on the height of the cooking chamber 20. Accordingly, the lighting unit 300 may evenly illuminate the inside of the cooking chamber 20. Since external light may enter a front portion of the cooking chamber 20 through the door, the lighting unit 300 may be located at a rear side of the main body 10.

Meanwhile, a circulator 60 may be installed at the rear of the cooking chamber 20 to circulate air in the cooking chamber 20 so that cooking materials are evenly heated.

FIG. 5 is an enlarged view of part A of FIG. 4.

FIG. 5 illustrates an enlarged view of the camera module 100. Referring to FIG. 5, the camera module 100 includes a camera 110 that generates a captured image by capturing the position of a rack on which cooking materials inside the cooking chamber 20 are placed.

The camera 110 may estimate the position of the rack on which the cooking materials are placed from the captured image.

As mentioned above, control of operation of the camera 110 and/or estimation of the position of the rack may be performed by the controller (or MCU) 160 for controlling the cooking appliance, installed in the electrical compartment 50, or by a separate controller (not shown) installed inside the camera module 100. Hereinafter, the control operation of the camera 110 will be exemplarily described as being performed by the controller 160.

In this way, under control of the controller 160, the camera 110 may capture the position of the rack on which cooking materials inside the cooking chamber 20 are placed to generate a captured image and estimate the position of the rack on which the cooking materials are placed from the captured image.

In this case, the controller 160 may set at least one of an angle of view or a focus of the camera 110 according to the estimated position of the rack. That is, the controller 160 may set the camera 110 to an angle of view suitable for the estimated position of the rack and focus the camera 110 on the estimated position of the rack.

The camera module 100 may be installed in the electrical compartment 50 above the cooking chamber 20. The electrical compartment 50 may be spatially separated from the cooking chamber 20. FIG. 5 illustrates a state in which the electrical compartment 50 in which the camera module 100 is installed is separated from the cooking chamber 20 by a space 21. A blocking material for blocking heat may be positioned in the separated space 21.

In this way, the camera module 100 is provided on an upper wall 14 of the cooking chamber 20 so as to capture the interior of the cooking chamber 20.

The position of the camera 110 may be fixed by a bracket 120. The bracket 120 may include a first support 121 and a second support 122 for forming an appropriate inclination angle of the camera 110.

In addition, a first glass 130 for blocking heat inside the cooking chamber 20 from being transferred to the camera 110 and a second glass 140 disposed between the camera 110 and the first glass 130, for blocking heat from being transferred to the camera 110, may be provided on a lower side of the camera 110.

Since the camera module 100 is disposed inside the electrical compartment 50, the temperature of the camera module 100 may increase due to heat generated from electrical components inside the electrical compartment 50. In addition, since the electrical compartment 50 in which the camera module 100 is disposed is provided above the cooking chamber 20, the temperature of the camera module 100 may increase even by heat generated in the cooking chamber 20.

When the temperature of the camera module 100 increases, a malfunction may occur in the camera 110 included in the camera module 100, and image quality may deteriorate. Accordingly, the camera cooling fan (200, see FIG. 4) may be provided on one side of the camera module 100 to cool the camera module 100. The cooling fan 200 may be installed at the rear of the main body 10.

Therefore, as mentioned above, glasses 130 and 140 including the first glass 130 and the second glass 140 provided in plurality may be disposed under the camera module 100. The first glass 130 may be fixed to glass brackets so as to be disposed on upper and lower surfaces of the upper wall 14, and the second glass 140 may be fixed to a glass holder disposed adjacent to a lower portion of the camera module 100.

A heat reflection coating layer may be provided on either side of each of the first glass 130 and the second glass 140, or the heat reflection coating layer may be provided on both sides of each of the first glass 130 and the second glass 140. That is, the first glass 130 and the second glass 140 may be formed of heat reflection glass.

A space between the first glass 130 and the second glass 140 may be sealed by a gasket 150.

Meanwhile, the camera module 100 or the controller 160 may transmit the captured image to a user equipment (not shown).

The controller 160 may estimate the position of a rack on which cooking materials are placed based on image recognition using captured images.

In addition, the controller 160 may estimate the position of the rack on which cooking materials are placed using a lighting reflection signal from among the captured images. That is, the controller 160 may estimate the position of the rack on which cooking materials are placed using the position of the lighting unit 300 and surrounding images.

A detailed operation of the camera module 100 or the controller 160 will be described later.

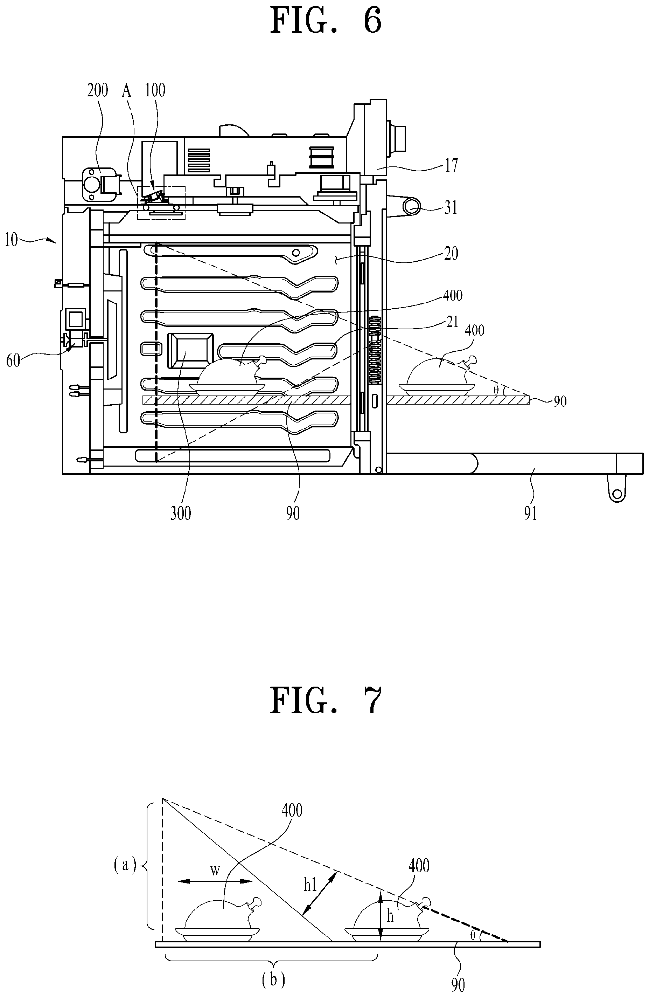

FIG. 6 is a schematic side view for explaining a process of measuring a volume of a cooking food using a cooking appliance according to an embodiment of the present disclosure.

FIG. 6 schematically shows a process of adding ingredients (cooking food) 400 are added to the cooking chamber 20.

The configuration of this cooking appliance may be common to that described above. Accordingly, a description of a configuration that is not separately described herein may be the same as that of the configuration described above.

That is, the cooking appliance according to the present embodiment includes the main body 10 defining an outer appearance, the cooking chamber 20 with a front surface that is open inside the main body 10, the door 30 provided on the front surface of the main body 10 and opening and closing the cooking chamber 20, and the camera module 100 installed above the cooking chamber 20 and photographing the inside of the cooking chamber 20.

The camera module 100 may be installed in the electrical compartment 50 above the cooking chamber 20. The camera module 100 may include the camera 110 (refer to FIG. 5) for photographing a location of the rack 90 in which the cooking food 400 is stored inside the cooking chamber 20. Since the configuration of the camera module 100 has been described in detail above, repeated descriptions will be omitted.

Other electrical components including the controller (or MCU) 160 for controlling a cooking appliance may be installed in the electrical compartment 50 (refer to FIG. 2). Although FIG. 2 shows a state in which the camera module 100 is connected to the controller 160, a separate controller may be embedded inside the camera module 100, and the camera module 100 may be controlled by this separate controller.

The controller 160 may measure the volume of the cooking food 400 introduced into the cooking chamber 20 using the camera module 100. A detailed description of this will be given later.

The camera cooling fan 200 may be installed on one side, for example, on a rear side of the camera module 100. External air sucked in by the camera cooling fan 200 may cool the camera module 100.

The cooking chamber 20 is prepared to have a box shape with an open front inside the main body 10, and cooking food may be taken in and out of the cooking chamber 20 through the open front of the cooking chamber 20.

The open front surface of the cooking chamber 20 is open and closed by the door 30, and the door 30 may be hinged to a lower part of the main body 10 to be rotatable with respect to the main body 10.

The door handle 31 to be gripped by a user is provided at an upper portion of the front surface of the door 30, and the user opens and closes the cooking chamber 20 by gripping the door handle 31.

As mentioned above, the plurality of supports 21 may be provided on both side walls inside the cooking chamber 20, and a rack 90 on which a cooking food is to be placed may be mounted on the plurality of supports.

Accordingly, a space divided into a plurality of the cooking chamber 20 may be utilized in various ways according to use intention.

FIG. 6 shows an example in which five the supports 21 are provided, and thus, the rack 90 may be mounted on each of the supports 21. FIG. 6 shows a state in which the rack 90 is mounted on the support 21 at a lowermost side.

Such a cooking appliance, for example, an oven, may include a sliding part 91 for moving the rack 90 into and out of the cooking chamber 20. Although the sliding part 91 is schematically represented in FIG. 6, the sliding part 91 may include a device for moving left and right in the state of FIG. 6. A detailed description of this is omitted.

Since the sliding part 91 is physically connected to the rack 90, when the sliding part 91 is moved, the rack 90 may be transferred into and out of the cooking chamber 20.

For example, the sliding part 91 may be transferred between the outside of the cooking chamber 20 (first position) and the inside of the cooking chamber 20 (second position). Accordingly, the rack 90 may be transferred between the outside of the cooking chamber 20 (first position) and the inside of the cooking chamber 20 (second position). When the rack 90 is transferred into the cooking chamber 20, the rack 90 may be supported by the supports 21.

As such, the process of placing the cooking food 400 inside the cooking chamber 20 using the sliding part 91 will be briefly described.

First, the door 30 is open, the rack 90 is extended out to the outside of the cooking chamber 20 (first position) using the sliding part 91, and the cooking food 400 may be placed on the rack 90.

Then, the rack 90 in which the cooking food 400 is located may be moved to the inside of the cooking chamber 20 (second position) by using the sliding part 91 and may be accommodated on the supports 21. The door 30 may be closed.

This process has been described as an example, and a transfer device other than the sliding part 91 may be used. For example, the rack 90 itself may have a transfer function without the sliding part 91.

In this way, in the process of placing the cooking food 400 inside the cooking chamber 20 using the sliding part 91, the controller 160 may measure the volume of the cooking food 400.

Specifically, the controller 160 may obtain a first captured image by photographing the cooking food 400 from outside the cooking chamber 20 (first position) using the camera module 100, and the controller 160 may obtain a second captured image by photographing the cooking food 400 accommodated in the second position. The controller 160 may measure the volume of the cooking food 400 using the first and second captured images obtained as such.

The controller 160 may estimate the height of the cooking food 400 using the first captured image, and estimate an area occupied by the cooking food 400 using the second captured image.

In this case, the controller 160 may compare pixels of the image in the process of estimating the height and area of the cooking food 400. That is, the controller 160 may estimate the height and area of the cooking food 400 by comparing the number of pixels of the first captured image/second captured image with the number of pixels of an image obtained by photographing the entire cooking chamber 20.

The first position may be a position at which the sliding part 91 (or the rack 90) is extended farthest from the main body 10 outside the cooking chamber 20. The second position may be a position at which the sliding part 91 (or the rack 90) is accommodated inside the cooking chamber 20.

Specifically, the controller 160 may estimate the height of the cooking food 400 by using the first captured image when the sliding part 91 is positioned at the first position after opening of the door 30 is detected.

At this time, in order to increase the accuracy of estimating the height of the cooking food 400, the height of the cooking food 400 may be estimated using trigonometric function calculation based on an angle from the camera module 100 at a position at which the sliding part 91 is extended out farthest from the main body 10. That is, the height of the cooking food 400 may be more accurately estimated by applying trigonometric function calculation to the height of the cooking food 400 estimated by the first captured image using a preset angle.

After estimating the height, the controller 160 may estimate the area of the cooking food 400 when the sliding part 91 is accommodated inside the cooking chamber 20 and closing of the door 30 is detected.

Information on the volume of the cooking food 400 measured in this way may be used to cook the cooking food 400. For example, when the volume of the cooking food 400 exceeds a certain size, a standard cooking time proposed for the cooking food 400 may be added, and additional heat may be supplied.

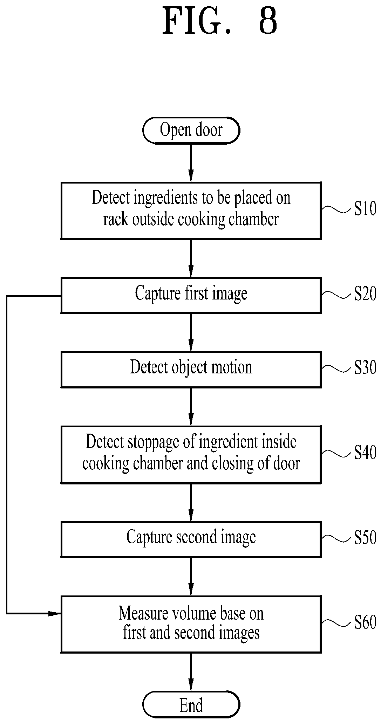

FIG. 7 is a schematic diagram showing a detailed process of measuring a volume of a cooking food using a cooking appliance according to an embodiment of the present disclosure. FIG. 8 is a flowchart illustrating a process of measuring a volume of a cooking food using a cooking appliance according to an embodiment of the present disclosure.

First, with reference to FIG. 8, the overall process of measuring the volume of the cooking food 400 using a cooking appliance according to an embodiment of the present disclosure will be briefly described.

First, a first captured image taken in a first position may be obtained using the camera module 100 (S20).

Then, a second captured image taken in the second position may be obtained using the camera module 100 (S50).

Then, the height of the cooking food 400 may be estimated using the first captured image, and the area of the cooking food 400 may be estimated using the second captured image to measure the volume of the cooking food 400 (S60).

Hereinafter, a specific process of measuring the volume of the cooking food 400 using a cooking appliance according to an embodiment of the present disclosure will be described with reference to FIGS. 6 to 8. The specific process of measuring the volume of the cooking food 400 may be performed by the controller 160 described above. In the following description, subjects of operations are omitted.

First, when the sliding part 91 and/or the rack 90 is located outside the cooking chamber 20 (first position) after the door 30 of the cooking appliance is open and the cooking food 400 (ingredients) is detected to be placed on the rack 90 (S10), the first captured image taken in the first position may be obtained using the camera module 100 (S20).

For example, the operation of obtaining the first captured image (S20) may be performed automatically when opening of the door 30 is detected, the sliding part 91 and/or the rack 90 are placed outside the cooking chamber 20 (first position), and then the cooking food 400 (ingredients) is detected to be placed on the rack 90 (S10).

That is, when a user opens the door 30, extends the rack 90, and places the cooking food 400 on the rack 90, the camera module 100 may obtain the first captured image by moving the cooking food 400 (ingredients) (S20).

To this end, the cooking appliance may include at least one of a sensor for detecting opening and closing of the door 30 and a load sensor for detecting whether an object is placed on the rack 90.

Even if these sensors are not installed, at least one or more of the processes described herein may be performed through object motion detection (S30) through an image/video captured by the camera module 100.

That is, determination of movement/stop states of the sliding part 91 may be performed through an image continuously captured through the camera module 100.

As such, when the first captured image is obtained (S20), the rack 90 is accommodated inside the cooking chamber 20 by movement of the sliding part 91, and then closing of the door 30 may be accommodated (S40).

Then, the second captured image may be obtained by photographing the cooking food 400 (ingredients) on the rack 90 accommodated inside the cooking chamber 20 (S50).

For example, the operation of obtaining the second captured image (S50) may be performed automatically when the rack 90 is accommodated inside the cooking chamber 20 (second position) by movement of the sliding part 91 and then closing of the door 30 is detected (S40).

That is, when a user moves the sliding part 91 to place the rack 90 inside the cooking chamber 20 and closes the door 30, this is detected (S40), and the camera module 100 may obtain the second captured image by photographing the cooking food 400 (ingredients) placed on the rack 90 at the second position (S50).

The volume of the cooking food 400 may then be estimated based on the first captured image and the second captured image.

As such, in the process of placing the cooking food 400 inside the cooking chamber 20 using the sliding part 91, the volume of the cooking food 400 may be measured.

FIG. 7 schematically illustrates this process. A height h of the cooking food 400 may be estimated using the first captured image, and a left and right width w/area occupied by the cooking food 400 may be estimated using the second captured image.

Since the first captured image is obtained when the cooking food 400 is maximally extended out in a horizontal direction b, the first captured image may be a lateral image of the cooking food 400, and the height of the cooking food 400 may be estimated through the lateral image.

Since the second captured image is obtained in a state in which the cooking food 400 is accommodated in the cooking chamber 20, the second captured image may be a downward image of the cooking food 400, and the left and right width w/area of the cooking food 400 may be estimated through the downward image.

Then, the approximate volume of the cooking food 400 may be measured by multiplying the height of the cooking food 400 with the area.

At this time, in the process of estimating the height h and left and right width w of the cooking food 400, pixels of the image may be compared. That is, the height and area of the cooking food 400 may be estimated by comparing the number of pixels in the first captured image/second captured image with the number of pixels in the image of the entire cooking chamber 20.

For example, the height and area of the cooking food 400 may be estimated by comparing the number of pixels corresponding to the image taken with the width and height a of the cooking chamber and the number of pixels of the first captured image/second captured image.

Specifically, when the width of the cooking chamber is 60 cm, the number of pixels is 600 at this time, and the number of pixels in a vertical direction of the first captured image is 100, these may be compared (1/6 * 60 cm = 10 cm) to estimate the left and right width w/area of the cooking food 400 (ingredients).

Similarly, the height of ingredients may be estimated according to the number of pixels photographed corresponding to the height a of the cooking chamber and the number of pixels in a horizontal direction of the second captured image.

Higher accuracy for the height h of the cooking food 400 estimated through the second captured image obtained in a state b in which the cooking food 400 is maximally extended out in a horizontal direction may be required.

Referring to FIG. 7, the height a of the cooking chamber and an angle θ from the camera module 100 at a position at which the sliding part 91 is extended farthest from the main body 10 may be determined in advance.

Therefore, trigonometric function calculation may be applied using the angle θ and the height h of the cooking food 400 obtained from the second captured image, and through this, the height h1 of the cooking food 400 may be more accurately estimated.

For example, a more accurate height h1 of the cooking food 400 may be obtained through calculation of the inverse cosine (cos⁻¹) of the angle θ for the height h of the cooking food 400 obtained from the second captured image. However, this is only one example, and calculation using a computer or the like may be used.

As described above, when a user opens the door 30 of the cooking appliance, extends the sliding part 91 or the rack 90, places the cooking food 400 thereon, places the rack 90 inside the cooking chamber 20, and then closes the door 30, the controller 160 may measure the volume of the cooking food 400 and inform the user of the information through the display 40 or a connected smart phone, or apply the information to the cooking process.

As explained above, information on the measured volume of the cooking food 400 may be used to cook the cooking food 400. For example, when the volume of the cooking food 400 exceeds a certain size, a standard cooking time proposed for the cooking food 400 may be added, and additional heat may also be supplied (e.g., by applying convection).

As described above, according to an embodiment of the present disclosure, the volume of ingredients may be estimated using a single camera rather than a plurality of cameras, and an automatic cooking process with a cooking appliance may be performed using the corresponding volume information.

Specifically, the cooking time and temperature of the cooking appliance may be automatically set and controlled using corresponding volume information.

The above description is merely illustrative of the technical idea of the present disclosure.

The scope of protection of the present disclosure should be interpreted by the claims below.

### INDUSTRIAL APPLICABILITY

The present invention provides a cooking appliance and a control method thereof for estimating a volume of ingredients using a single camera.

## Claims

1. A cooking appliance comprising:
a main body (10);
a cooking chamber (20) provided with an open surface inside the main body (10) and including a plurality of stages supporting a position of a rack (90) configured to accommodate a cooking food (400);
a door (30) installed on the open surface of the main body (10);
a camera module provided above the cooking chamber (20) and including a camera configured to photograph the position of the rack (90) on which the cooking food (400) is accommodated inside the cooking chamber (20);
a sliding part configured to move the rack (90) between a first position outside the cooking chamber (20) and a second position inside the cooking chamber (20); and
a controller (160) configured to measure a volume of the cooking food (400) using a first captured image taken at the first position and a second captured image taken at the second position using the camera module,
**characterized in that**
the controller (160) estimates a height of the cooking food (400) using the first captured image based on the door (30) being open and the sliding part being positioned at the first position, wherein the height of the cooking food (400) is estimated using trigonometric function calculation based on an angle (θ) from the camera module at a position at which the sliding part is extended out farthest from the main body (10),
wherein the controller estimates an area of the cooking food (400) using the second captured image, and
wherein the controller (160) measures the volume using the estimated height and area of the cooking food (400).

2. The cooking appliance of claim 1, wherein the first position is a position at which the sliding part is extended farthest from the main body (10).

3. The cooking appliance of claim 1, wherein the second position is a position at which the rack (90) is accommodated inside the cooking chamber (20).

4. The cooking appliance of any one of claims 1 to 3, wherein the controller (160) estimates an area of the cooking food (400) based on the sliding part being accommodated inside the cooking chamber (20), and closing of the door (30) being detected after the height is estimated.

5. The cooking appliance of claim 1, wherein the controller (160) measures the volume based on an image pixel number of the first captured image and the second captured image.

6. The cooking appliance of claim 5, wherein the controller (160) measures the volume by comparing an image pixel number corresponding to a height of an inner space and a side surface of the cooking chamber (20) with the image pixel number of the first captured image and the second captured image.

7. A control method of a cooking appliance according to any of claim 1-6, said appliance including a main body (10) including a cooking chamber (20) in which a door (30) is installed, a camera module provided above the cooking chamber (20) and including a camera configured to photograph the position of the rack (90) on which the cooking food (400) is accommodated inside the cooking chamber (20), and a sliding part configured to move the rack (90) between a first position outside the cooking chamber (20) and a second position inside the cooking chamber (20), the method comprising:
obtaining a first captured image taken at the first position using the camera module;
obtaining a second captured image taken at the second position second position;
**characterized by** the method further comprising:
estimating a height of the cooking food (400) using the first captured image, wherein estimating the height of the cooking food (400) includes estimating the height using trigonometric function calculation based on an angle (θ) from the camera module at a position at which the sliding part is extended out farthest from the main body (10),
estimating an area of the cooking food (400) using the second captured image,
measuring the volume of the cooking food (400) using the estimated height and area of the cooking food (400).

8. The method of claim 7, wherein obtaining the first captured image is performed based on the door (30) being open and the rack (90) being detected to be placed at the first position.

9. The method of claim 7, wherein obtaining the second captured image is performed based on the sliding part being accommodated inside the cooking chamber (20) and closing of the door (30) being detected.

10. The method of claim 7, wherein measuring the volume of the cooking food (400) includes measuring the volume based on an image pixel number of the first captured image and the second captured image.

11. The method of claim 10, wherein the measuring the volume of the cooking food (400) includes measuring the volume by comparing an image pixel number corresponding to a height of an inner space and a side surface of the cooking chamber (20) with the image pixel number of the first captured image and the second captured image.

## Patentansprüche

1. Kochvorrichtung, aufweisend:
einen Hauptkörper (10);
einen Garraum (20), der mit einer offenen Fläche innerhalb des Hauptkörpers (10) versehen ist und eine Mehrzahl von Ebenen aufweist, die eine Position eines Rosts (90) stützen, der ausgelegt ist, um ein Gargut (400) aufzunehmen;
eine Tür (30), die an der offenen Fläche des Hauptkörpers (10) installiert ist;
ein Kameramodul, das oberhalb des Garraums (20) vorgesehen ist und eine Kamera aufweist, die ausgelegt ist, die Position des Rosts (90), auf dem das Gargut (400) innerhalb des Garraums (20) aufgenommen ist, zu fotografieren;
ein Gleitteil, das ausgelegt ist, den Rost (90) zwischen einer ersten Position außerhalb des Garraums (20) und einer zweiten Position innerhalb des Garraums (20) zu bewegen; und
eine Steuereinheit (160), die ausgelegt ist, ein Volumen des Garguts (400) unter Verwendung eines ersten aufgenommenen Bildes, das an der ersten Position aufgenommen wurde, und eines zweiten aufgenommenen Bildes, das an der zweiten Position unter Verwendung des Kameramoduls aufgenommen wurde, zu messen,
**dadurch gekennzeichnet, dass**
die Steuereinheit (160) eine Höhe des Garguts (400) unter Verwendung des ersten aufgenommenen Bildes auf Grundlage dessen schätzt, dass die Tür (30) offen ist und das Gleitteil an der ersten Position positioniert ist, wobei die Höhe des Garguts (400) unter Verwendung einer trigonometrischen Funktionsberechnung auf Grundlage eines Winkels (θ) von dem Kameramodul an einer Position geschätzt wird, an der das Gleitteil am weitesten aus dem Hauptkörper (10) heraus ausgefahren ist,
wobei die Steuereinheit eine Fläche des Garguts (400) unter Verwendung des zweiten aufgenommenen Bildes schätzt, und
wobei die Steuereinheit (160) das Volumen unter Verwendung der geschätzten Höhe und Fläche des Garguts (400) misst.

2. Kochvorrichtung nach Anspruch 1, wobei die erste Position eine Position ist, an der das Gleitteil am weitesten aus dem Hauptkörper (10) ausgefahren ist.

3. Kochvorrichtung nach Anspruch 1, wobei die zweite Position eine Position ist, an der der Rost (90) innerhalb des Garraums (20) aufgenommen ist.

4. Kochvorrichtung nach einem der Ansprüche 1 bis 3, wobei die Steuereinheit (160) eine Fläche des Garguts (400) auf Grundlage dessen schätzt, dass das Gleitteil innerhalb des Garraums (20) aufgenommen ist, und dass ein Schließen der Tür (30) erfasst wird, nachdem die Höhe geschätzt wurde.

5. Kochvorrichtung nach Anspruch 1, wobei die Steuereinheit (160) das Volumen auf Grundlage einer Bildpixelanzahl des ersten aufgenommenen Bildes und des zweiten aufgenommenen Bildes misst.

6. Kochvorrichtung nach Anspruch 5, wobei die Steuereinheit (160) das Volumen misst, indem sie eine Bildpixelanzahl, die einer Höhe eines Innenraums und einer Seitenfläche des Garraums (20) entspricht, mit der Bildpixelanzahl des ersten aufgenommenen Bildes und des zweiten aufgenommenen Bildes vergleicht.

7. Steuerverfahren einer Kochvorrichtung nach einem der Ansprüche 1 bis 6, wobei die Kochvorrichtung einen Hauptkörper (10) aufweist, der einen Garraum (20) aufweist, in dem eine Tür (30) installiert ist, ein Kameramodul, das oberhalb des Garraums (20) vorgesehen ist und eine Kamera aufweist, die ausgelegt ist, die Position des Rosts (90), auf dem das Gargut (400) innerhalb des Garraums (20) aufgenommen ist, zu fotografieren, und ein Gleitteil aufweist, das ausgelegt ist, den Rost (90) zwischen einer ersten Position außerhalb des Garraums (20) und einer zweiten Position innerhalb des Garraums (20) zu bewegen, wobei das Verfahren umfasst:
Erhalten eines ersten aufgenommenen Bildes, das an der ersten Position unter Verwendung des Kameramoduls aufgenommen wurde;
Erhalten eines zweiten aufgenommenen Bildes, das an der zweiten Position zweiten Position aufgenommen wurde;
**dadurch gekennzeichnet, dass** das Verfahren ferner umfasst:
Schätzen einer Höhe des Garguts (400) unter Verwendung des ersten aufgenommenen Bildes, wobei das Schätzen der Höhe des Garguts (400) ein Schätzen der Höhe unter Verwendung einer trigonometrischen Funktionsberechnung auf Grundlage eines Winkels (θ) von dem Kameramodul an einer Position umfasst, an der das Gleitteil am weitesten aus dem Hauptkörper (10) heraus ausgefahren ist,
Schätzen einer Fläche des Garguts (400) unter Verwendung des zweiten aufgenommenen Bildes,
Messen des Volumens des Garguts (400) unter Verwendung der geschätzten Höhe und Fläche des Garguts (400).

8. Verfahren nach Anspruch 7, wobei das Erhalten des ersten aufgenommenen Bildes auf Grundlage dessen durchgeführt wird, dass die Tür (30) offen ist und erfasst wird, dass der Rost (90) an der ersten Position platziert ist.

9. Verfahren nach Anspruch 7, wobei das Erhalten des zweiten aufgenommenen Bildes auf Grundlage dessen durchgeführt wird, dass das Gleitteil innerhalb des Garraums (20) aufgenommen ist und ein Schließen der Tür (30) erfasst wird.

10. Verfahren nach Anspruch 7, wobei das Messen des Volumens des Garguts (400) ein Messen des Volumens auf Grundlage einer Bildpixelanzahl des ersten aufgenommenen Bildes und des zweiten aufgenommenen Bildes umfasst.

11. Verfahren nach Anspruch 10, wobei das Messen des Volumens des Garguts (400) ein Messen des Volumens umfasst, indem eine Bildpixelanzahl, die einer Höhe eines Innenraums und einer Seitenfläche des Garraums (20) entspricht, mit der Bildpixelanzahl des ersten aufgenommenen Bildes und des zweiten aufgenommenen Bildes verglichen wird.

## Revendications

1. Appareil de cuisson, comprenant :
un corps principal (10) ;
une chambre de cuisson (20) pourvue d'une surface ouverte à l'intérieur du corps principal (10) et comprenant une pluralité de niveaux supportant une position d'une grille (90) configurée pour recevoir un aliment à cuire (400) ;
une porte (30) installée sur la surface ouverte du corps principal (10) ;
un module de caméra prévu au-dessus de la chambre de cuisson (20) et comprenant une caméra configurée pour photographier la position de la grille (90) sur laquelle l'aliment à cuire (400) est reçu à l'intérieur de la chambre de cuisson (20) ;
une partie coulissante configurée pour déplacer la grille (90) entre une première position à l'extérieur de la chambre de cuisson (20) et une deuxième position à l'intérieur de la chambre de cuisson (20) ; et
un contrôleur (160) configuré pour mesurer un volume de l'aliment à cuire (400) en utilisant une première image capturée prise à la première position et une deuxième image capturée prise à la deuxième position en utilisant le module de caméra,
**caractérisé en ce que**
le contrôleur (160) estime une hauteur de l'aliment à cuire (400) en utilisant la première image capturée sur la base du fait que la porte (30) est ouverte et que la partie coulissante est positionnée à la première position, dans lequel la hauteur de l'aliment à cuire (400) est estimée en utilisant un calcul de fonction trigonométrique sur la base d'un angle (θ) depuis le module de caméra à une position à laquelle la partie coulissante est déployée vers l'extérieur le plus loin du corps principal (10),
dans lequel le contrôleur estime une surface de l'aliment à cuire (400) en utilisant la deuxième image capturée, et
dans lequel le contrôleur (160) mesure le volume en utilisant la hauteur et la surface estimées de l'aliment à cuire (400).

2. Appareil de cuisson selon la revendication 1, dans lequel la première position est une position à laquelle la partie coulissante est déployée le plus loin du corps principal (10).

3. Appareil de cuisson selon la revendication 1, dans lequel la deuxième position est une position à laquelle la grille (90) est reçue à l'intérieur de la chambre de cuisson (20).

4. Appareil de cuisson selon l'une quelconque des revendications 1 à 3, dans lequel le contrôleur (160) estime une surface de l'aliment à cuire (400) sur la base du fait que la partie coulissante est reçue à l'intérieur de la chambre de cuisson (20), et que la fermeture de la porte (30) est détectée après que la hauteur a été estimée.

5. Appareil de cuisson selon la revendication 1, dans lequel le contrôleur (160) mesure le volume sur la base d'un nombre de pixels d'image de la première image capturée et de la deuxième image capturée.

6. Appareil de cuisson selon la revendication 5, dans lequel le contrôleur (160) mesure le volume en comparant un nombre de pixels d'image correspondant à une hauteur d'un espace intérieur et à une surface latérale de la chambre de cuisson (20) avec le nombre de pixels d'image de la première image capturée et de la deuxième image capturée.

7. Procédé de commande d'un appareil de cuisson selon l'une quelconque des revendications 1 à 6, ledit appareil comprenant un corps principal (10) comprenant une chambre de cuisson (20) dans laquelle une porte (30) est installée, un module de caméra prévu au-dessus de la chambre de cuisson (20) et comprenant une caméra configurée pour photographier la position de la grille (90) sur laquelle l'aliment à cuire (400) est reçu à l'intérieur de la chambre de cuisson (20), et une partie coulissante configurée pour déplacer la grille (90) entre une première position à l'extérieur de la chambre de cuisson (20) et une deuxième position à l'intérieur de la chambre de cuisson (20), le procédé comprenant :
l'obtention d'une première image capturée prise à la première position en utilisant le module de caméra ;
l'obtention d'une deuxième image capturée prise à la deuxième position deuxième position ;
**caractérisé en ce que** le procédé comprend en outre :
l'estimation d'une hauteur de l'aliment à cuire (400) en utilisant la première image capturée, dans lequel l'estimation de la hauteur de l'aliment à cuire (400) comprend l'estimation de la hauteur en utilisant un calcul de fonction trigonométrique sur la base d'un angle (θ) depuis le module de caméra à une position à laquelle la partie coulissante est déployée vers l'extérieur le plus loin du corps principal (10),
l'estimation d'une surface de l'aliment à cuire (400) en utilisant la deuxième image capturée,
la mesure du volume de l'aliment à cuire (400) en utilisant la hauteur et la surface estimées de l'aliment à cuire (400).

8. Procédé selon la revendication 7, dans lequel l'obtention de la première image capturée est effectuée sur la base du fait que la porte (30) est ouverte et que la grille (90) est détectée comme étant placée à la première position.

9. Procédé selon la revendication 7, dans lequel l'obtention de la deuxième image capturée est effectuée sur la base du fait que la partie coulissante est reçue à l'intérieur de la chambre de cuisson (20) et que la fermeture de la porte (30) est détectée.

10. Procédé selon la revendication 7, dans lequel la mesure du volume de l'aliment à cuire (400) comprend la mesure du volume sur la base d'un nombre de pixels d'image de la première image capturée et de la deuxième image capturée.

11. Procédé selon la revendication 10, dans lequel la mesure du volume de l'aliment à cuire (400) comprend la mesure du volume en comparant un nombre de pixels d'image correspondant à une hauteur d'un espace intérieur et à une surface latérale de la chambre de cuisson (20) avec le nombre de pixels d'image de la première image capturée et de la deuxième image capturée.
